# EUROPÄISCHE PATENTSCHRIFT

(11) **EP 0 352 759 B1**
(45) Veröffentlichungstag und Bekanntmachung des Hinweises auf die Patenterteilung: **17.01.1996**
(21) Anmeldenummer: 89113734.1
(22) Anmeldetag: 25.07.1989
(51) Int. Cl.: G05D 1/00

(54) **Steuersystem fur Stelleinrichtungen eines Kraftfahrzeugs**
Control system for actuators in a motor vehicle
Système de contrôle pour un actionneur dans un véhicule

(30) Priorität: 26.07.1988 DE 3825280
(43) Veröffentlichungstag der Anmeldung: 31.01.1990
(73) Patentinhaber: Bayerische Motoren Werke Aktiengesellschaft, D-80788 München (DE)
(72) Erfinder: Auffhammer, Reinhard, D-8000 München 60 (DE); Donges, Edmund, Dr., D-8080 Fürstenfeldbruck (DE)

(56) Entgegenhaltungen:
- EP-A- 0 115 994
- EP-A- 0 225 773
- EP-A- 0 243 180
- GB-A- 2 127 507
- PATENT ABSTRACTS OF JAPAN vol. 12, no. 1 (M-656)(2448) 06 Januar 1988,& JP-A-62 166161 (TOYOTA MOTOR CORP) 22 Juli 1987

## Beschreibung

Die Erfindung bezieht sich auf ein Steuersystem nach dem Oberbegriff des Patentanspruchs 1 sowie auf ein Vertahren zum Durchführen einer Notfallmaßnahme unter Verwendung eines derartigen Steuersystems.

Bei den im folgenden behandelten Stelleinrichtungen kann es sich um eine Hinterachs-Lenkung zusätzlich zu der üblichen Vorderachs-Lenkung, eine Vorderachs-Uberlagerungslenkung zusätzlich zu der üblichen Vorderachs-Lenkung, eine aktive Wankstabilisierung, eine aktive Federung oder aber auch um ein sog. elektronisches Gaspedal handeln. Sämtlichen Stelleinrichtungen gemeinsam ist, daß eine mechanische Grundfunktion vorhanden ist, die im Falle der Hinterachs-Lenkung die Nullstellung der Hinterräder, bei der Uberlagerungslenkung die übliche Vorderachs-Lenkung, bei Wankstabilisierung und aktiver Federung die übliche mechanische Federung und beim elektronischen Gaspedal die Ausgangslage eines Brennkraftmaschinen-Leistungssteuer-bzw. Regelorgans darstellt. Die Notfallmaßnahme kann je nach Anwendungsfall und/oder Schwere des Fehlers unterschiedlich sein. Im einfachsten Fall kann sie darin bestehen, das Stellglied für die Zusatzfunktion unwirksam zu schalten oder in der Stellung festzuhalten, die dem Fehler unmittelbar vorangeht. Das Stellglied kann auch, soweit möglich, gesteuert in eine definierte, unkritische Ruhelage überführt werden. Der Fehler seinerseits kann in einer der Funktionsketten oder aber auch im Stellglied selbst liegen.

Auf dem Gebiet der Technik sind unterschiedliche Lösungen für das Erkennen eines Notfalls und das Auslösen einer Notfallmaßnahme bekannt. Insbesondere im Flugzeugbau gibt es hierzu die sog. zwei aus drei Redundanz. Das bedeutet, daß drei voneinander unabhängige Funktionszweige aufgebaut sind und in Fehler eines Funktionszweigs durch die fehlerfreie Funktion der beiden anderen Funktionszweige erkannt und der fehlerbehaftete Funktionszweig auf diese Weise eliminiert wird. Derartige Einrichtungen sind bei Kraftfahrzeugen aus Kosten- und Einbauplatzgründen nicht anwendbar.

Bei spurgebundenen Bussystemen sind zwei parallele Funktionszweige bekannt, von denen jeder für sich die gewünschte Stellfunktion ausführt. Bei einem Fehler eines Funktionszweigs wird dieser abgeschaltet und lediglich der andere Funktionszweig weiterbetrieben. Eine derartige Einrichtung stellt keinen Gewinn an Systemsicherheit dar, da im Fehlerfalle lediglich ein einziger Funktionszweig zur Verfügung steht, der dann völlig "ungeschützt" arbeitet. Ein Fehler des noch verbleibenden Funktionszweigs kann dann nicht mehr erkannt und beseitigt werden. Für den Anwendungsfall bei Kraftfahrzeugen kommt erschwerend hinzu, daß eine vollständige Verdoppelung der Funktionszweige auch eine Verdoppelung des Stellgliedes für die Zusatzfunktion bedeutet. Im Fehlerfalle kann nun das Stellglied des fehlerhaften Funktionszweiges die Funktion des anderen Stellgliedes blockieren. Auch dieser Umstand läßt ein derartiges Sicherheitskonzept bei Kraftfahrzeugen nicht anwendbar erscheinen.

Aus der DE-A 32 34 637 und der EP 0 115 994 A1 sind zwei prinzipiell gleichartig aufgebaute Steuersysteme bekannt, bei denen zwei parallel angeordnete und redundant aufgebaute Funktionsketten mit jeweils einem Rechner auf ein gemeinsames Stellglied arbeiten. Im Fehlerfall steuern der bzw. die Rechner das Stellglied im Sinne einer Notfallmaßnahme an. Tritt ein Fehler im Stellglied auf, z.B. eine Blockierung, so ist es nicht möglich, eine evtl. fehlerhafte Arbeitsweise des Stellglieds zu korrigieren. Ein derartiges Steuersystem ist für den Einsatz für eine Zusatzfunktion nicht geeignet, da es nicht in jedem Fall gewährleistet ist, eine fehlerhafte Arbeitsweise des Stellglieds zu unterbinden.

Der Erfindung liegt die Aufgabe zugrunde, ein elektronisches Steuersystem der eingangs genannten Art zu schaffen, das mit geringem Aufwand ein Höchstmaß an Funktionssicherheit bietet und das gerade im Fehlerfalle sicher für die Durchführung der Notfallmaßnahme sorgt. Weiter geht es bei der Erfindung darum, ein Verfahren zu schaffen, das unter Verwendung eines derartigen Steuersystems im Fehlerfalle die Notfallmaßnahme mit möglichst sicherheitsgünstiger Wirkung einleitet.

Die Erfindung löst diese Aufgabe für das Steuersystem durch die Mittel, die im Kennzeichen des Patentanspruchs 1 angegeben sind, für das Verfahren durch die Merkmale, die im kennzeichnenden Teil des Patentanspruchs 6 angegeben sind.

Für das Steuersystem ist unter der Voraussetzung der mechanischen Grundfunktion das Sicherheitskonzept geprägt durch die Überwachung gleich wirkender Elemente der Funktionsketten sowie das Auslösen der Nottallmaßnahme, wenn bei diesem Vergleich ein Fehler eines der beiden Elemente festgestellt wird. Bei diesen Elementen handelt es sich um einen oder mehrere Sensor(en) für die Eingangsgrößen des Rechners, den Rechner selbst, sowie eine Notfalleinrichtung. Ferner können eine ggf. nachgeschaltete, hier nicht weiter behandelte Aufbereitungs- oder Umwandlungseinheit für die Sensorsignale sowie dem Rechner nachgeschaltete Verstärker oder dgl. vorgesehen sein. Jede Notfalleinrichtung soll für sich in der Lage sein, eine ausreichende Notfallmaßnahme durchzuführen. Im Falle der vorhin bereits genannten Hinterachs-Lenkung kann eine Notfallmaßnahme bei einem relativ geringen Fehler darin bestehen, die ausgelenkten Hinterräder in die Null-Lage gezielt und mit endlicher Geschwindigkeit zurückzuführen. Bei einem schweren Fehler, beispielsweise eines der Rechner oder aber des Stellglieds kann es erforderlich sein, die Hinterräder in der Stellung zu halten, die zuletzt, d.h. unmittelbar vor Auftreten des Fehlers, eingestellt ist. Sämtlichen Notfallmaßnahmen gemeinsam ist, daß sie entweder den gerade bestehenden Funktionszustand beibehalten oder in einer Richtung verändern, die die Sicherheit erhöht. Für den Fall der Hinterachs-Lenkung bedeutet dies, daß die Hinterräder im Notfall in der vorliegenden Stellung, d.h. auch im ausgelenkten Zustand, gehalten werden bzw. in die Mittelstellung zurückgeführt, d.h. die Auslenkung beseitigt wird.

Im Falle des elektronischen Gaspedals wird das Leistungsstellorgan der Brennkraftmaschine festgehalten oder aber in die Null-Lage zurückgeführt. Diese Nullage ist bei dem Leistungsstellorgan durch den Leerlaufanschlag und bei der Hinterachs-Lenkung durch den Geradeauslauf der Hinterräder bestimmt und kann auch durch oder im Rahmen der mechanischen Grundfunktion erreicht werden. Hierzu können beispielsweise einfache Federelemente vorgesehen sein, die für das Einstellen der Grundfunktion sorgen und gegen deren Wirkung das Stellglied für die Zusatzfunktion arbeitet. Im Fehlerfall kann als notfallmaßnahme vorgesehen sein, das Stellglied außer Eingriff zu bringen und mit Hilfe der mechanischen Federelemente die Einstellung der mechanischen Grundfunktion, hier der Null-Lage des verstellten Teiles vorzunehmen.

Die Überwachung der einzelnen Elemente der Funktionsstufen kann im Falle der die Eingangsgrößen liefernden Sensoren mit geringem Aufwand mit Hilfe des nachgeschalteten Rechners erfolgen. Hierzu werden die Ausgangssignale der Sensoren jedem der Rechner zugeführt. Diese überprüfen diese Ausgangssignale auf funktionale Gleichheit und sind in der Lage, eine funktionale Abweichung der Ausgangssignale festzustellen. In diesem Falle ist auch die Möglichkeit gegeben, den fehlerhaften Sensor zu identifizieren und eine relativ schonende Notfallmaßnahme auszulösen, indem das Stellglied mit endlicher Geschwindigkeit in den unwirksamen Zustand gebracht wird.

Die nächste Funktionsstufe, in Form der Rechner kann zweckmäßigerweise mit Hilfe einer Kommunikationseinrichtung überwacht werden. Eine derartige Einrichtung kann im einfachsten Fall als Datenleitung oder mit Vorteil als Dual-Port-RAM ausgebildet sein. Jeder Rechner besitzt dort einen Speicherbereich, in welchem er selbst schreiben und lesen kann und in dem der andere Rechner jeweils nur lesen kann.

Ein weiteres Ziel der Erfindung ist, das Auslösen einer Notfallmaßnahme auch dann sicherzustellen, wenn nicht nur ein Fehler, sondern wenn ein sog. Doppelfehler, d.h. zwei Fehler auftreten. Dabei sollen diese Fehler gleichzeitig, d.h. innerhalb eines Zeittaktes an beliebigen Stellen des Steuersystems auftreten können. Durch die stufenweise Prüfung der Funktionskette auf gleiche Funktion ist das Auftreten zweier Fehler auf unterschiedlichen Stufen relativ unkritisch, da bereits durch den Fehler auf der im Signalablauf früheren Stufe die Notfallmaßnahme ausgelöst wird.

Kritisch ist jedoch der Fall, bei dem in einer Funktionsstufe und insbesondere bei zwei unmittelbar funktional korrespondierenden Elementen ein Fehler auftritt. Es ist theoretisch möglich, daß diese Fehler gleich geartet bzw. gleich gerichtet sind und damit von einer Überwachungseinrichtung nicht erkannt werden können. Diesem Problem wird dadurch abgeholfen, daß die gleichwirkenden Elemente der beiden Funktionsketten sich hinsichtlich ihrer Arbeitsweise und/oder Qualität und/oder Quantität ihrer Ein- oder Ausgangssignale unterscheiden.

Konkret bedeutet dies, daß im Falle der Rechner diese von unterschiedlichen Herstellern stammen und/oder nach unterschiedlichen Algorithmen und/oder auf unterschiedliche Weise (z.B. als 8-Bit bzw. 16-Bit-Prozessoren), arbeiten.

Gleichwertige Sensoren können sich in inren Ausgangssignalen unterscheiden. Sind beispielsweise zwei Sensoren, d.h. pro Funktionsstufe ein Sensor, für einen Drehwinkel, z.B. des Lenkrads, vorgesehen, so kann die Arbeitsweise der beiden Sensoren sich hinsichtlich ihrer Impuls-Quantität oder ihrer Ausgangssignalqualität unterscheiden. Letzteres wird beispielsweise dadurch erreicht, daß einer der beiden Sensoren ein digitales, der andere ein analoges Ausgangssignal liefert.

Ferner sind hier zu nennen Ausgangssignale mit unterschiedlicher Polarität oder unterschiedlichem Gradienten, unterschiedliches Ansprechverhalten, unterschiedliche mechanische Übersetzung, verschiedene Meßprinzipien, usw..

Auf diese Weise wird es möglich, durch mikroskopische Vielfalt bei makroskopisch gleicher Funktion ein Höchstmaß an Sicherheit zu erzielen und den obengenannten Fall einer gleichgerichteten Funktionsstörung zweier funktional gleichartiger Elemente einer korrespondierenden Funktionsstufe mit an Sicherheit grenzender Wahrscheinlichkeit zu vermeiden.

Die Erfindung ist anhand der Zeichnung weiter erläutert. Diese zeigt in
- Fig. 1: den prinzipiellen Aufbau eines erfindungsgemäßen Steuersystems und in
- Fig. 2: als Beispiel schematisch den funktionellen Aufbau einer Hinterachs-Lenkung eines Kraftfahrzeugs.

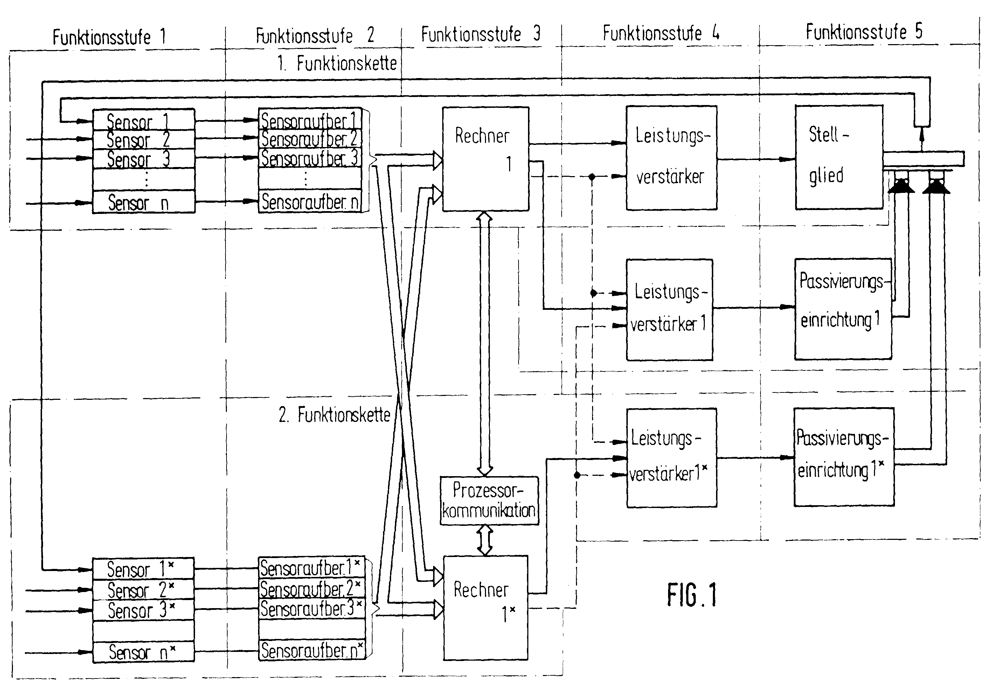

Der in Fig. 1 gezeigte prinzipielle Aufbau eines erfindungsgemäßen Steuersystems für Stelleinrichtungen eines Kraftfahrzeugs besteht im wesentlichen aus zwei parallelen Funktionsketten, die mit 1.Funktionskette und 2.Funktionskette bezeichnet sind. Jede der Ketten besteht aus fünf Funktionsstufen, die die Bezeichnung Funktionsstufe.1 bis Funktionsstufe.5 tragen. Jede dieser Funktionsstufen korrespondiert mit einer entsprechenden Funktionsstufe der anderen Funktionskette und enthält ein oder mehrere Elemente. Dies sind für
die Funktionsstufe.1 Sensoren Sensor.1 bis Sensor.n bzw. Sensor.1^{*} bis Sensor.n^{*} für physikalische Parameter oder dgl.,
für die Funktionsstufe.2 den Sensoren nachgeschaltete Signalaufbereitungen, die mit Sensoraufber.1 bis Sensoraufber.n bzw. Sensoraufber.1^{*} bis Sensoraufber.n^{*} bezeichnet sind,
die Funktionsstufe 3 einen Rechner.1 bzw. Rechner.1^{*}
die Funktionsstufe 4 einen Leistungsverstärker. 1 bzw. 1^{*} sowie
die Funktionsstufe 5 eine Passivierungseinrichtung. 1 bzw. 1^{*}.

Dabei bezeichnet die Kennzeichnung "*" ein wirkungsgleiches redundantes Element.

Ferner steuert der Rechner 1 über einen "Leistungsverstärker" ein Stellglied. Die Stellung des Stellglieds wird mit Hilfe der Sensoren Sensor.1 bzw. Sensor.1^{*} als Sensorsignal in der Funktionsstufe 1 verarbeitet.

Der funktionale Aufbau ergibt sich in seinen weiteren wesentlichen Grundzügen aus der Form der Verbindungs- bzw. Wirklinien. Für aktive Zustände, bei denen bei fehlerfreiem Betrieb ein Signal weitergegeben wird, sind diese Verbindungen durchgezogen. Die für den Notfallbetrieb maßgeblichen Verbindungen sind strichliert. Damit ergibt sich, daß der Rechner.1 neben dem Leistungsverstärker und dem Stellglied auch auf den Leistungsverstärker.1 und darüber auf die Passivierungseinrichtung.1, nicht jedoch auf den Leistungsverstärker.1* und die Passivierunqseinrichtung.1^{*} im Sinne einer aktiven Signalweitergabe wirkt.

Im Notfall jedoch wirkt der Rechner.1 sowohl auf den Leistungsverstärker und das Stellglied im Sinne des Durchführens einer Notfallmaßnahme und zusätzlich parallel auf den Leistungsverstärker.1 und die Passivierungseinrichtung.1 sowie den Leistungsverstärker.1* und die Passivierungseinrichtung.1^{*}. Der Rechner.1 ist wie der Rechner.1^{*} in der Lage, beide Passivierungseinrichtungen zu aktivieren und damit gleichzeitig zwei jeweils für sich bereits ausreichenden Notfallmaßnahmen mit Hilfe der beiden Passivierungseinrichtungen.1 und 1* durchzuführen.

Der Rechner.1^{*} ist nicht in der Lage, den Leistungsverstärker und das Stellglied zu bedienen. Damit aber wird die 2.Funktionskette vollständig als Überwachungseinrichtung für die 1.Funktionskette tätig; nur die 1.Funktionskette besitzt allein die zusätzliche Eigenschaft, den Leistungsverstärker und das Stellglied zu aktivieren.

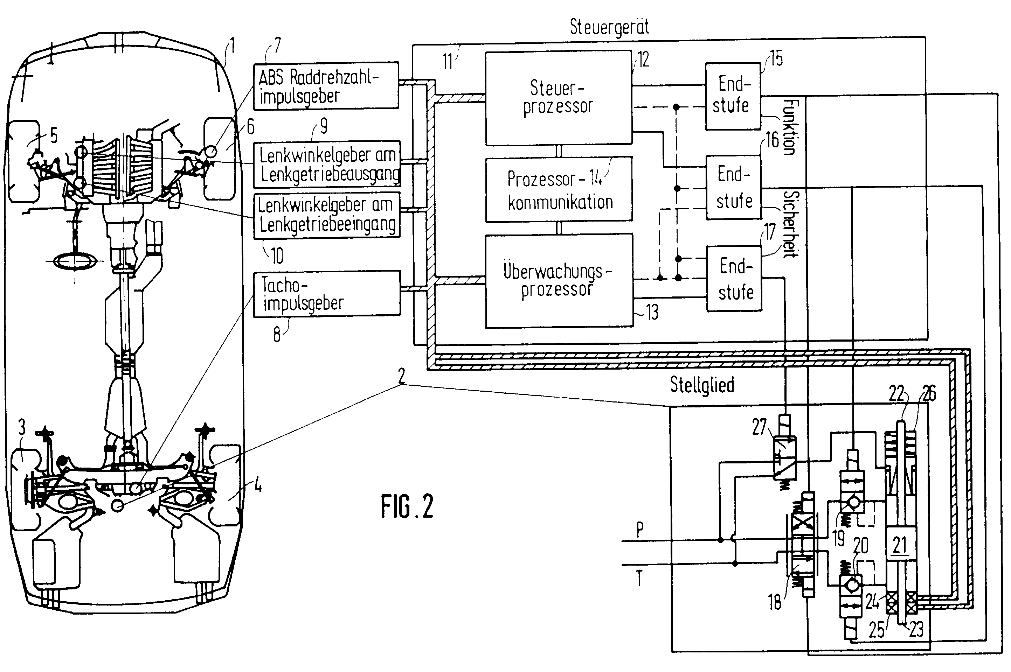

Die prinzipiellen Komponenten des Steuersystems sind in Fig. 2 konkretisiert und in der zugehörigen Beschreibung in Klammern angegeben.

Das in Fig. 2 in der Draufsicht gezeigte Kraftfahrzeug 1 besitzt eine Stelleinrichtung mit einem Stellglied 2 (Stellglied) für eine Hinterachse mit den Hinterrädern 3 und 4. Mit Hilfe des Stellglieds 2 wird der Lenkwinkel der Hinterräder 3 und 4, ausgehend von der aufgrund der Achskinematik eingestellten Grundfunktion des Geradeauslaufs entsprechend dem Lenkwinkel der Vorderräder 5 und 6 verstellt. Der Zusammenhang zwischen den Lenkwinkeln der Vorderräder 5 und 6 und den Hinterrädern 3 und 4 kann entsprechend dem fahrdynamisch günstigen Algorithmus gewählt sein und soll nicht Gegenstand der folgenden Beschreibung sein.

Weiter finden sich Sensoren für die Fahrzeuggeschwindigkeit in Form eines ABS-Raddrehzahlimpulsgebers 7 (Sensor 2) am Vorderrad 6 bzw. eines Tachoimpulsgebers 8 (Sensor 2*) an der Hinterachse sowie Lenkwinkelgeber für die Vorderachse in Form eines Lenkwinkelgebers 9 (Sensor 3) am Lenkgetriebeausgang und eines Lenkwinkelgebers 10 (Sensor 3*) am Lenkgetriebeeingang.

Den Sensoren 7 bis 10 nachgeschaltet ist ein Steuergerät 11, das aus nicht dargestellten Sensoraufbereitungen, zwei Rechnern 12 und 13 (Rechner.1/Rechner.1*), einer Kommunikationseinrichtung 14 sowie drei Endstufen 15 bis 17 (Leistungsverstärker/Leistungsverstärker.1/Leistungsverstärker.1^{*}) besteht. Das Steuergerät 11 steuert das im rechten unteren Teil der Figur im Detail dargestellte Stellglied 2. Dieses enthält im wesentlichen ein hydraulisches Proportionalventil 18, diesem nachgeschaltete Rückschlagventile 19 und 20 sowie einen Stellkolben 21, der ausgehend von der dargestellten Mittellage den Lenkwinkel der Hinterräder 3 und 4 über seine Kolbenstange 22 verstellt (nicht im einzelnen dargestellt).

An der Kolbenstange 22 sind zwei Sensoren 24 und 25 (sensor1/Sensor1^{*}) für die Überwachung der Stellung des Kolbens 21 und damit des Lenkwinkels der Hinterräder 3 und 4 angeordnet, die mit dem Steuergerät 11 verbunden sind. An der Kolbenstange 22 ist ferner eine mechanische Klemmeinrichtung 26 (Passivierungseinrichtung. 1) angeordnet, die im Bedarfsfall die Kolbenstange 22 fixiert und damit den Lenkwinkel der Hinterräder 3 und 4 festhält. Die Klemmeinrichtung 26 ist durch ein Ventil 27 angesteuert. Ferner ist mit Hilfe der Rückschlagventile 19 und 20 eine hydraulische Klemmeinrichtung (Passivierungseinrichtung.1^{*}) realisiert. Im Bedarfsfall schließen beide Ventile nachgeschaltete Arbeitsräume für den Stellkolben 21 und fixieren diesen in seiner Stellung.

Die Ausgangssignale der beiden Fahrzeug-Geschwindigkeitssensoren 7 und 8, der beiden Lenkwinkelgeber 9 und 10 und der beiden Überwachungs-Sensoren 24 und 25 sind jeweils zugleich den Rechnern 12 und 13 zugeführt. Jeder der Rechner steuert beide, den Notfalleinrichtungen zugeordneten Endstufen 16,17 an, wenn es darum geht, eine Notfallmaßnahme einzuleiten. Der Rechner 12 steuert zusätzlich die Endstufe 15 des Proportionalventils. Dabei wirkt die Endstufe 15 auf das Proportionalventil 18 und führt dieses in die Mittellage zurück, in der das Proportionalventil 18 unwirksam ist und lediglich den über die Eingangsleitung P anstehenden Druck aus einer nicht dargestellten Hydraulik-Versorgungseinrichtung von dem Stellglied fernhält. Die Endstufe 16 wirkt auf die Rückschlagventile 19 und 20 und hält diese nicht mehr geöffnet. Schließlich steuert die Endstufe 17 in diesem Fall ein Ventil 27, das der Klemmeinrichtung 26 vorgeschaltet ist, in dem Sinne, in dem die Klemmeinrichtung 26 wirksam wird.

Im Gegensatz dazu wirkt der Rechner 12 nur auf zwei Endstufen 15 und 16 und der Rechner 13 nur auf die Endstufe 17 ein, wenn es darum geht, das Stellglied zu aktivieren. Für diesen normalen Betriebsfall werden durch die Endstufe 15 das Proportionalventil 18 aktiviert, durch die Endstufe 16 die Rückschlagventile 19 und 20 in den offenen Zustand gebracht und durch die Endstufe 17 das Ventil 27 geöffnet und damit die Klemmeinrichtung 26 unwirksam gemacht.

Die Sensoren 7,9 und 24 bilden für sich eine Funktionsstufe, die Sensoren 8,10 und 25 die hierzu parallele Funktionsstufe, der Rechner 12 die nächste und der Rechner 13 die hierzu parallele Funktionsstufe, die Endstufen 16 und 17 die jeweils nächste Funktionsstufe und die Klemmeinrichtung 26 bzw. die Rückschlagventile 19 und 20 die jeweils letzte Funktionsstufe. Daraus ergibt sich, daß jedes funktionale Element der Funktionsstufen redundant vorgesehen ist.

Die funktional gleichwertigen Elemente einer Funktionsstufe werden jeweils für sich überprüft. Für die Sensoren 7 und 8 sowie die Sensoren 9 und 10 geschieht dies mit Hilfe des Rechners 12 und unabhängig davon auch mit Hilfe des Rechners 13. Etwaige Fehler in einem der Sensoren werden auf diese Weise erkannt und führen dazu, daß ein weiter unten erläutertes Notfallsignal ausgewirkt wird. Die Rechner 12 und 13 ihrerseits überwachen sich gegenseitig mit Hilfe einer Kommunikationseinrichtung 14, die als Dual-Port-RAM ausgebildet sein kann. Die Wirkungsweise einer derartigen Einrichtung, die jeweils einen Speicherbereich hat, in dem einer der beiden Rechner diesen umschreiben und nur der andere lesen kann (gilt für beide Rechner) besteht insbesondere darin, daß die Rechenabläufe innerhalb der beiden Rechnern 12 und 13 gegenseitig überwacht werden können und fehlerhafte Asynchronitäten erkannt werden. Auch im Fall, daß die beiden Rechner zu widersprüchlichen Ergebnissen kommen, und eine asynchrone Arbeitsweise der beiden Rechner dabei nicht stört, wird eine Notfallmaßnahme ausgelöst.

Ein Fehler einer der Endstufen 15 bis 17 wird mit Hilfe der Überwachungs-Sensoren 24 und 25 überwacht und führt ebenfalls zum Auslösen eines Notfallsignals. Entsprechendes gilt bei Ausfall eines der beiden Überwachungs-Sensoren 24 oder 25.

Schließlich ist auch dafür gesorgt, daß beim Totalausfall der Elektrik oder der Hydraulik das Notfallsignal ausgelöst wird bzw. eine Notfallmaßnahme ergriffen wird. Im Falle der Elektrik schließen die als Elektromagnetventile ausgebildeten Ventile 27, 19 und 20 unter der Wirkung von Federn und führen dazu, daß einerseits die Wirkung der Hydraulik auf den Stellkolben 21 aufgehoben wird und andererseits selbsttätig mit Hilfe des dann in den unteren der beiden gezeichneten Zustände gehenden Ventils 27, bei dem die Klemmeinrichtung 26 wirksam wird und die Kolbenstange festhält.

Entsprechend wird bei einem Totalausfall der Hydraulik, bei dem die Eingangsleitung P drucklos wird, die Klemmeinrichtung 26 selbsttätig in den Wirkzustand übergehen, bei dem sie die Kolbenstange 22 arretiert. Dies wird durch die Arbeitsweise der Klemmeinrichtung 26 erreicht, die nur bei Vorhandensein eines von Null verschiedenen Drucks in der Leitung P und bei in der oberen Stellung befindlichen Schaltventil 27 die Kolbenstange 22 freigibt.

Auf diese Weise ist es möglich, einen einfachen Fehler, d.h. den Fehler in einem der vorhandenen Elemente zu erkennen und eine entsprechende Notfallmaßnahme auszulösen. Entsprechend der Art des erkannten Fehlers kann diese Notfallmaßnahme in einem sofortigen Einstellen der Klemmeinrichtung 26 in den Wirkzustand erfolgen (wie z.B. im Falle des Totalausfalls der Elektrik), sie kann aber auch in einem gesteuerten Ubergang in den Ruhezustand bestehen, bei dem der Stellkolben 21 seine Mittellage einnimmt und damit der Lenkwinkel der Hinterräder 3 und 4 gleich Null ist. Dies kann durch entsprechende Steuerung mit Hilfe des Proportionalventils 18 erreicht werden.

Von besonderer Bedeutung ist die Eigenschaft, auch einen wirksamen Schutz vor Doppelfehlern zu erzielen. Betrachtet man zunächst zwei Fehler, die in unterschiedlichen Funktionsstufen liegen, so ergibt sich bereits aufgrund des hinsichtlich des Signalflusses ersten Fehlers ein Auslösen der Notfallmaßnahme. Das Auftreten des im Signalfluß zweiten Fehlers hat dann keinen Einfluß mehr.

Kritisch ist der Fall, bei dem zwei gleichwirkende Elemente in zwei parallelen Funktionsstufen ausfallen. Ein derartiger, an sich ohnehin relativ unwahrscheinlicher Zustand, wird bei der Erfindung dadurch abgefangen, daß gleich wirkende bzw. gleichwertige Elemente einer Funktionsstufe nicht den identischen Aufbau besitzen. Dies zeigt sich beispielsweise in Form des Fahrzeug-Geschwindigkeits-Sensors, in dem die Sensoren 7 und 8 zwar eine Aussage über die Fahrzeuggeschwindigkeit ermöglichen, jedoch auf ein anderes Teil (Vorderrad 6 bzw. Hinterachsgetriebe zugreifen). Hinzu kommt, daß die Sensoren 7 und 8, bezogen auf dieselbe Fahrzeuggeschwindigkeit, eine unterschiedliche Impulszahl im Normalfall liefern. Jede Abweichung von dieser Vorgabe kann mit Hilfe der Rechner 12 und 13 ohne weiteres erkannt werden.

Dasselbe gilt für den Sensor des Lenkwinkelgebers in Form der Sensoren 9 und 10. Auch diese sitzen an unterschiedlichen Stellen und liefern, bezogen auf den Lenkwinkel, ein quantitativ unterschiedliches Ausgangssignal.

Ein weiterer kritischer Fehlerzustand ist der Ausfall des Proportionalventils 18 oder der zugeordneten Endstufe 15, denn dieser Fehler kann zu einem schnellen Auswandern der Kolbenstange 22 führen. Stellt einer oder beide Rechner 12 oder 13 mit Hilfe der Überwachungs-Sensoren 24 und/oder 25 fest, daß die Stellung der Kolbenstange unzulässig weit von der gewünschten Position abweicht, wird diese unerwünschte Bewegung mit Hilfe der Passivierungseinrichtungen verhindert.

Da es prinzipiell möglich ist, daß der zweite Fehler für die Doppelfehlerbetrachtung die Passivierungseinrichtungen betrifft, sind diese doppelt ausgelegt, um auch in diesem Fall das System sicher in den passiven Zustand überführen zu können.

Beispielsweise kann trotz eines Ausfalls von einem oder beiden Rückschlagventilen 19 und/oder 20 oder der zugeordneten Endstufe 16 mit Hilfe der Klemmeinrichtung 26 das System in den sicheren Zustand (d.h. passive Grundfunktion) überführt werden.

In ähnlicher Weise ist es beim Ausfall der Klemmeinrichtung 26 oder der zugeordneten Endstufe 17 als zweitem Fehler möglich, das System mit Hilfe der Rückschlagventile 19 und 20 ebenfalls in den sicheren Zustand zu bringen.

Ein möglicher gleichgerichteter Ausfall der beiden Passivierungseinrichtungen wird durch die konstruktiv unterschiedliche Ausführungen der beiden Passivierungseinichtungen (Rückschlagventile bzw. mechanische Klemmvorrichtung) mit an Sicherheit grenzender Wahrscheinlichkeit vermieden.

Fallen beide Überwachungs-Sensoren 24 und 25 gleichzeitig aus bzw. zeigen beide gleichzeitig ein Fehlverhalten, so läßt sich ein kritischer Fall ebenfalls vermeiden. Dies wird erreicht durch unterschiedliche Betriebsweise bzw. unterschiedlichen Aufbau der beiden Sensoren 24 und 25. Beispielsweise können die Sensoren jeweils ein analoges bzw. digitales Ausgangssignal liefern oder sich in ihrer Polarität oder Kennliniensteigung unterscheiden. Ein Fehler beider Sensoren kann sich somit nie gleichgerichtet auswirken und kann damit mit Hilfe der Rechner 12 und 13 eindeutig erkannt werden.

Als möglicher worst-case verbleibt somit der Fall, bei dem die Hydraulik und die Elektrik vollkommen ausfallen. Auch dann ist durch die Arbeitsweise der Klemmeinrichtung 26 und der Rückschlagventile 19 und 20 - gegen eine mechanische Feder - dafür gesorgt, daß dann die Klemmeinrichtung 26 anspricht (entspricht dem vorhin genannten Fall des Totalausfalls der Hydraulik allein) und der Stellkolben 21 fixiert wird.

Auf diese Weise ist auch eine Sicherheit vor Doppelfehlern erreicht. Damit aber ist auch bei sicherheitskritischen Funktionseinheiten, wie beispielsweise einer lenkbaren Hinterachse, einer Überlagerungslenkung für die Vorderachse usw. ein Höchstmaß an Sicherheit gewährleistet.

## Patentansprüche

1. Steuersystem für Stelleinrichtungen eines Kraftfahrzeugs, die zusätzlich zu einer mechanischen Grundfunktion eine mit elektronischen Mitteln erzielbare Zusatzfunktion durchführen, mit mindestens einem Sensor (Sensor 1-n) für eine Eingangsgröße, einem Rechner (1,1*) zum Umsetzen der Eingangsgröße in eine Ausgangsgröße für ein der Zusatzfunktion zugeordnetes Stellglied (2) und mit einer Notfalleinrichtung für eine Notfallmaßnahme bei Auftreten eines Fehlers, dadurch gekennzeichnet, daß eine aus den Funktionsstufen Sensor (en), Rechner und einer dem Stellglied (21, Fig. 2) zugeordneten Notfalleinrichtung bestehende Funktionskette im Gegensatz zum nur einfach vorhandenen Stellglied redundant ausgebildet ist, daß die gleichwirkenden Elemente der Funktionsketten auf gleiche Funktion überwacht sind, daß die Notfalleinrichtung (Klemmeinrichtung 26, Rückschlagventile 19 und 20) ansteuerbar ist, wenn an sich gleichwirkende Elemente der Funktionsketten eine Abweichung um ein vorgegebenes Maß aufweisen und daß die Notfalleinrichtung (Klemmeinrichtung 26, Rückschlagventile 19 und 20) dem Stellglied (21) nachgeschaltet ist, wobei der Rechner (12, 13) die Notfalleinrichtung bei Ausfall des Stellglieds ansteuert.

2. Steuersystem nach Anspruch 1,
dadurch gekennzeichnet, daß die Ausgangssignale der die Eingangsgrößen liefernden Sensoren beiden Rechnern zugleich zugeführt sind.

3. Steuersystem nach Anspruch 1 oder 2, dadurch gekennzeichnet,
daß die Arbeitsweise der Rechner mittels einer Kommunikationseinrichtung überwacht ist.

4. Steuersystem nach einem der Ansprüche 1 bis 3,
dadurch gekennzeichnet, daß in den Funktionsketten weitere Funktionsstufen vorgesehen sind, die mit Funktionsstufen der jeweils anderen Funktionskette wirkungsmäßig korrespondieren.

5. Steuersystem nach einem der Ansprüche 1 bis 4,
dadurch gekennzeichnet, daß die gleichwirkenden Elemente der beiden Funktionsketten sich hinsichtlich ihrer Arbeitsweise und/oder Qualität und/oder Quantität ihrer Ein- oder Ausgangssignale unterscheiden.

6. Verfahren zum Durchführen einer Notfallmaßnahme unter Verwendung eines Steuersystems für Stelleinrichtungen eines Kraftfahrzeugs, die zusätzlich zu einer mechanischen Grundfunktion eine mit elektronischen Mitteln erzielbare Zusatzfunktion durchführen, mit mindestens einem Sensor (Sensor 1-n) für eine Eingangsgröße, einem Rechner (1,1*) zum Umsetzen der Eingangsgröße in eine Ausgangsgröße für ein der Zusatzfunktion zugeordnetes Stellglied (2) und mit einer Notfalleinrichtung für eine Notfallmaßnahme bei Auftreten eines Fehlers, dadurch gekennzeichnet, daß die Notfallmaßnahme abhängig vom auftretenden Fehler unterschiedlich gewählt wird, daß eine aus den Funktionsstufen Sensor (en), Rechner und einer dem Stellglied (21, Fig. 2) zugeordneten Notfalleinrichtung bestehende Funktionskette im Gegensatz zum nur einfach vorhandenen Stellglied redundant ausgebildet ist, daß die gleichwirkenden Elemente der Funktionsketten auf gleiche Funktion überwacht sind, daß die Notfalleinrichtung (Klemmeinrichtung 26, Rückschlagventile 19 und 20) ansteuerbar ist, wenn an sich gleichwirkende Elemente der Funktionsketten eine Abweichung um ein vorgegebenes Maß aufweisen und daß ferner die Notfalleinrichtung (Klemmeinrichtung 26, Rückschlagventile 19 und 20) dem Stellglied (21) nachgeschaltet ist, wobei der Rechner (12, 13) die Notfalleinrichtung bei Ausfall des Stellglieds ansteuert.

## Claims

1. A control system for actuating elements of a motor vehicle, which in addition to a mechanical basic function carry out an additional function obtainable by electronic means, with at least one sensor (sensors 1-n) for an input variable, a computer (1,1*) to convert the input variable into an output variable for a controlling element (2) assigned to the additional function and with an emergency device for an emergency measure in the event of a fault, characterised in that a functional chain comprising the functional stages sensor(s), computer and an emergency device assigned to the controlling element (21, Fig. 2), is provided in a redundant form in contrast to the controlling element which is present only as a single unit, that the equivalent elements of the functional chains are monitored for the same function, that the emergency device (clamping device 26, stop valves 19 and 20) can be controlled if equivalent elements of the functional chains deviate by a pre-defined degree and that the emergency device (clamping device 26, stop valves 19 and 20) is connected in series with the controlling element (21), wherein the computer (12, 13) controls the emergency device in the event of failure of the controlling element.

2. A control system according to claim 1, characterised in that the output signals of the sensors delivering the input variables are transmitted to both computers at the same time.

3. A control system according to claim 1 or 2, characterised in that the mode of operation of the computers is monitored by a communication device.

4. A control system according to any one of claims 1 to 3, characterised in that further functional stages are provided in the functional chains and correspond to the functional stages of the other functional chain in terms of action.

5. A control system according to any one of claims 1 to 4, characterised in that the equivalent elements of the two functional chains differ from one another in terms of their mode of operation and/or the quality and/or the quantity of their input or output signals.

6. A method for performing an emergency measure using a control system for actuating elements of a motor vehicle, which in addition to a mechanical basic function carry out an additional function obtainable by electronic means, with at least one sensor (sensors 1-n) for an input variable, a computer (1,1*) to convert the input variable into an output variable for a controlling element (2) assigned to the additional function and with an emergency device for an emergency measure in the event of a fault, characterised in that the emergency measure can be selected differently in dependence upon the fault occurring, that a functional chain comprising the functional stages sensor(s), computer and an emergency device assigned to the controlling element (21, Fig.2), is provided in a redundant form in contrast to the controlling element which is present only as a single unit, that the equivalent elements of the functional chains are monitored for the same function, that the emergency device (clamping device 26, stop valves 19 and 20) can be controlled if equivalent elements of the functional chains deviate by a pre-defined degree and that the emergency device (clamping device 26, stop valves 19 and 20) is connected in series with the controlling element (21), wherein the computer (12, 13) controls the emergency device in the event of failure of the controlling element.

## Revendications

1. Système de commande pour des dispositifs de réglage d'un véhicule automobile qui en plus d'un fonctionnement mécanique de base effectue un fonctionnement supplémentaire qui peut être obtenu avec des moyens électroniques, avec au moins un détecteur (détecteur 1 à n) pour une grandeur d'entrée, avec un ordinateur (1, 1*) pour convertir la grandeur d'entrée en une grandeur de sortie pour un organe de réglage (2) associé au fonctionnement additionnel et avec un dispositif de secours pour une mesure d'urgence lorsque survient un défaut, système de commande caractérisé en ce qu'une chaîne de fonctionnement qui se compose des étages de fonctionnement : détecteur(s), ordinateur et un système de secours associé à l'organe de réglage (21, figure 2) est constituée de façon redondante au contraire de l'organe de réglage qui existe seulement de façon simple, en ce que les éléments qui agissent de la même façon, des chaînes de fonctionnement sont contrôlées sur le même fonctionnement, en ce que le système de secours (dispositif de connexion 26, clapets anti-retour 19 et 20) peut être commandé, quand des éléments agissant en soi de la même façon, des chaînes de fonctionnement présentent un écart d'un niveau prédéfini et en ce que le système de secours (dispositif de connexion 26, clapets anti-retour 19 et 20) est monté en aval de l'organe de réglage (21), l'ordinateur (12, 13) commandant le système de secours en cas de défaillance de l'organe de réglage.

2. Système de commande selon la revendication 1, caractérisé en ce que les signaux de sortie des détecteurs, qui délivrent les grandeurs d'entrée, sont associés aux deux ordinateurs.

3. Système de commande selon la revendication 1 ou 2, caractérisé en ce que le mode de travail des ordinateurs est contrôlé au moyen d'un système de communication.

4. Système de commande selon l'une des revendications 1 à 3, caractérisé en ce que dans les chaînes de fonctionnement, on prévoit d'autres étages de fonctionnement, qui correspondent quant à leur action aux étages de fonctionnement des autres chaînes respectives de fonctionnement.

5. Système de commande selon l'une des revendications 1 à 4, caractérisé en ce que les éléments qui agissent de la même façon, des deux chaînes de fonctionnement se différencient en ce qui concerne leur mode de travail et/ou la qualité et/ou la quantité de leurs signaux d'entrée ou de sortie.

6. Procédé pour la mise en oeuvre d'une mesure d'urgence en utilisant un système de commande de dispositifs de réglage d'un véhicule automobile, qui en plus d'un fonctionnement mécanique de base effectuent une fonction supplémentaire qui peut être obtenue avec des moyens électroniques, avec au moins un détecteur (détecteur 1 à n) pour une grandeur d'entrée, avec un ordinateur (1, 1*) pour convertir la grandeur d'entrée en une grandeur de sortie pour un organe de réglage (2) associé à la fonction supplémentaire et avec un système de secours pour une mesure d'urgence quand survient un défaut, caractérisé en ce que l'on choisit différemment la mesure d'urgence en fonction du défaut qui survient, en ce qu'une chaîne de fonctionnement se composant des étages de fonctionnement constitués par le détecteur ou les détecteurs, les ordinateurs et un système de secours associé à l'organe de réglage (21, figure 2) est constituée de façon redondante au contraire d'un organe de réglage qui existe seulement de façon simple, en ce que les éléments qui agissent de la même façon des chaînes de fonctionnement sont contrôlés sur le même fonctionnement, en ce que le système de secours (dispositif de connexion 26, clapets anti-retour 19 et 20) peut être commandé quand des éléments agissant en soi de la même façon des chaînes de fonctionnement présentent un écart d'un niveau prédéfini et en ce qu'en outre le système de secours (dispositif de connexion 26, clapets anti-retour 19 et 20) est monté en aval de l'organe de réglage (21), l'ordinateur (12, 13) commandant le système de secours en cas de défaillance de l'organe de réglage.
